# EUROPÄISCHE PATENTANMELDUNG

(11) **EP 4 300 394 A1**
(43) Veröffentlichungstag der Anmeldung: **03.01.2024**
(21) Anmeldenummer: 23179114.6
(22) Anmeldetag: 14.06.2023
(51) Int. Cl.: G06Q 10/08, G06Q 50/28

(54) **AUTOMATISCHE LOKALISIERUNG EINES LADUNGSTRÄGERS**

(30) Priorität: 30.06.2022 DE 102022116398
(71) Anmelder: STILL GmbH, 22113 Hamburg (DE)
(72) Erfinder: ERBTS, Patrick, 21244 Buchholz Nordheide (DE)
(74) Vertreter: Patentship Patentanwaltgesellschaft

(57) **Zusammenfassung**

Verfahren (300) zum automatischen Lokalisieren zumindest eines Ladungsträgers einer Mehrzahl von Ladungsträgern in einer elektronischen Darstellung eines industriellen Umfelds, wobei in dem industriellen Umfeld die Mehrzahl der Ladungsträger angeordnet ist. Den Ladungsträgern sind Gruppen von Ladungsträgern zugeordnet. Jede Gruppe von Ladungsträgern ist durch eine Gruppenidentifikation identifizierbar. Das Verfahren (300) umfasst die folgenden Merkmale: Erfassen (301) einer Benutzereingabe durch eine elektronische Benutzerschnittstelle; Detektieren (303) eines Befehls zum Anzeigen von Ladungsträgern gemäß einer bestimmten Gruppenidentifikation in der erfassten Benutzereingabe durch eine Steuerungseinrichtung; Erfassen (305) der Position von zumindest einem Ladungsträger der Mehrzahl von Ladungsträgern, welcher der durch die detektierte Gruppenidentifikation identifizierten Gruppe von Ladungsträgern zugeordnet ist, durch die Steuerungseinrichtung; und Anzeigen (307) der Position des zumindest einen Ladungsträgers in der elektronischen Darstellung des industriellen Umfelds mittels einer durch die Steuerungseinrichtung gesteuerten elektronischen Anzeige.

## Beschreibung

Die Erfindung betrifft ein Verfahren und eine Systemanordnung zum automatischen Lokalisieren zumindest eines Ladungsträgers einer Mehrzahl von Ladungsträgern in einer elektronischen Darstellung eines industriellen Umfelds.

Zum Wiederauffinden (im Englischen auch als Tracken bezeichnet) von Ladungsträgern, wie beispielsweise Paletten, in einem industriellen Umfeld, insbesondere in einem Warenlager, werden üblicherweise Ladungsträger mit Sensoren oder Trackern ausgestattet. Die Sensoren bzw. Tracker können die aktuelle Position der Ladungsträger an einen Benutzer übermitteln, um eine Lokalisierung der Ladungsträger in dem industriellen Umfeld zu erreichen. Bei einer Vielzahl von unterschiedlichen Ladungsträgern besteht oftmals der Bedarf Informationen über einzelne Ladungsträger isoliert zu erhalten.

Der Erfindung liegt daher die Aufgabe zugrunde, eine Position eines Ladungsträgers Ladungsträgers basierend auf einer Benutzereingabe vorteilhaft zu ermitteln und anzuzeigen.

Diese Aufgabe wird durch die Merkmale der unabhängigen Ansprüche gelöst. Vorteilhafte Ausführungsformen der Erfindung sind Gegenstand der abhängigen Ansprüche, der Beschreibung sowie der beiliegenden Figuren.

Gemäß einem ersten Aspekt wird die erfindungsgemäße Aufgabe durch ein Verfahren zum automatischen Lokalisieren zumindest eines Ladungsträgers einer Mehrzahl von Ladungsträgern in einer elektronischen Darstellung eines industriellen Umfelds gelöst, wobei in dem industriellen Umfeld die Mehrzahl der Ladungsträger angeordnet ist, wobei den Ladungsträgern Gruppen von Ladungsträgern zugeordnet sind, wobei jede Gruppe von Ladungsträgern durch eine Gruppenidentifikation identifizierbar ist, mit folgenden Merkmalen: Erfassen einer Benutzereingabe durch eine elektronische Benutzerschnittstelle; Detektieren eines Befehls zum Anzeigen von Ladungsträgern gemäß einer bestimmten Gruppenidentifikation in der erfassten Benutzereingabe durch eine Steuerungseinrichtung; Erfassen der Position von zumindest einem Ladungsträger der Mehrzahl von Ladungsträgern, welcher der durch die detektierte Gruppenidentifikation identifizierten Gruppe von Ladungsträgern zugeordnet ist, durch die Steuerungseinrichtung; und Anzeigen der Position des zumindest einen Ladungsträgers in der elektronischen Darstellung des industriellen Umfelds mittels einer durch die Steuerungseinrichtung gesteuerten elektronischen Anzeige.

Dadurch wird die Position, beispielsweise nur die Position, des Ladungsträgers auf der elektronischen Anzeige angezeigt, dessen Gruppenidentifkation in der Benutzereingabe detektiert wurde. Somit können je nach bestimmter Gruppenidentifikation nur die Ladungsträger identifiziert und angezeigt werden, über die weitere Informationen erstellt werden sollen.

Unter dem Ladungsträger kann eine Transporteinheit zum Transportieren von Waren, wie beispielsweise eine Palette, eine Gitterbox, ein Regal, ein Schubkasten oder ein Roboter, insbesondere ein Flurförderzeug, verstanden werden.

In einer Ausführungsform umfasst die elektronische Benutzerschnittstelle eine graphische Benutzerschnittstelle, eine Tastatur und/oder eine Audioschnittstelle.

In einer Ausführungsform umfasst die elektronische Benutzerschnittstelle eine Audioschnittstelle, wobei die Audioschnittstelle einen Sprachbefehl eines Benutzers aufnimmt, und wobei der Sprachbefehl durch eine Spracherkennung, insbesondere mittels domainspezifischer Spracherkennung (Domain Specific Language), insbesondere durch die Steuerungseinrichtung, transformiert wird, um den Befehl zum Anzeigen von Ladungsträgern zu detektieren.

In einer Ausführungsform werden ansprechend auf die Detektion der Gruppenidentifikation die Positionen sämtlicher Ladungsträger in der elektronischen Darstellung angezeigt, welche der durch die Gruppenidentifikation identifizierten Gruppe zugeordnet sind.

Dadurch können alle durch die Gruppenidentifikation spezifizierte Ladungsträger auf der elektronischen Anzeige dargestellt werden.

In einer Ausführungsform kann jedem in dem industriellen Umfeld angeordneten Ladungsträger ein Ladungszustand aus einer Mehrzahl von vorbestimmten Ladungszuständen zugeordnet werden, mit folgenden Merkmalen: Detektieren eines weiteren Befehls nach einem Anzeigen eines bestimmten Ladungszustands in der erfassten Benutzereingabe durch die Steuerungseinrichtung; Erfassen von zumindest einem Ladungsträger, zu welchem der bestimmte Ladungszustand zugeordnet ist; und Automatisches Anzeigen der Position des zumindest einen Ladungsträgers der Mehrzahl von Ladungsträgern in der elektronischen Darstellung des industriellen Umfelds, welchem der bestimmte Ladungszustand zugeordnet ist, mittels der elektronischen Anzeige.

Dadurch wird ein von dem Ladungszustand abhängiges Anzeigen der Position des Ladungsträgers auf der elektronischen Anzeige bewirkt.

In einer Ausführungsform werden nur diejenigen Ladungsträger angezeigt, welche der durch die Gruppenidentifikation identifizierten Gruppe zugeordnet sind und welchen der bestimmte Ladungszustand zugeordnet ist.

Dadurch können alle durch die Gruppenidentifikation und den bestimmten Ladungszustand spezifizierte Ladungsträger auf der elektronischen Anzeige dargestellt werden.

In einer Ausführungsform sind unterschiedliche Ladungszustände durch unterschiedliche Zusammensetzung der Beladung des Ladungsträgers, oder durch unterschiedliche Beladungsmengen der Beladung des Ladungsträgers bestimmt.

Durch wird ein Anzeigen abhängig von unterschiedlicher Beladungsmenge oder unterschiedlicher Beladungszusammensetzung des Ladungsträgers bewirkt.

In einer Ausführungsform umfasst das Verfahren folgende Merkmale: Erfassen des industriellen Umfelds durch zumindest einen Sensor, insbesondere durch ein Sensornetzwerk, um erfasste Umfelddaten zu erhalten; Erfassen von Ladungsträgern in den erfassten Umfelddaten, welche einer Gruppe von Ladungsträgern gemäß einer Gruppenidentifikation aus der Mehrzahl der Gruppenidentifikationen zugeordnet sind, und/oder welchen ein Ladungszustand aus einer Mehrzahl von Ladungszuständen zugeordnet ist, wobei das Erfassen durch die Steuerungseinrichtung durchgeführt wird; und Erfassen von Positionen der erfassten Ladungsträger durch die Steuerungseinrichtung; und Verknüpfen der erfassten Positionen mit der elektronischen Darstellung des industriellen Umfelds durch die Steuerungseinrichtung, um die erfassten Positionen in der elektronischen Darstellung des industriellen Umfelds anzuzeigen.

Dadurch können die Ladungsträger basierend auf den erfassten Umfelddaten des zumindest einen Sensors erfasst und deren Position angezeigt werden.

In einer Ausführungsform werden die Ladungsträger der gemäß der Gruppenidentifikation identifizierten Gruppe von Ladungsträgern mittels eines neuronalen Netzes in den erfassten Umfelddaten erfasst, wobei das neuronale Netz zur Erfassung von Ladungsträgern eingerichtet ist und durch die Steuerungseinrichtung ausgeführt wird.

Durch Implementierung des neuronalen Netzes kann eine Erfassbarkeit einer Vielzahl von gemäß der Gruppenidentifikation identifizierten Gruppen von Ladungsträgern durch die Steuerungseinrichtung bewirkt werden. Das neuronale Netz umfasst beispielsweise ein tiefes neuronales Netz (im Englischen auch bezeichnet als Deep Neural Network, DNN).

In einer Ausführungsform werden die Ladungszustände der Ladungsträger in den erfassten Umfelddaten mittels eines neuronalen Netzes in den erfassten Umfelddaten erfasst, wobei das neuronale Netz zur Erkennung von Ladungszuständen eingerichtet ist und durch die Steuerungseinrichtung ausgeführt wird.

Durch Implementierung des neuronalen Netzes kann eine Erfassbarkeit einer Vielzahl von Ladungszuständen der Ladungsträger durch die Steuerungseinrichtung bewirkt werden. Das neuronale Netz umfasst beispielsweise ein tiefes neuronales Netz (im Englischen auch bezeichnet als Deep Neural Network, DNN).

In einer Ausführungsform ist die Ausgabe des neuronalen Netzes ein digitaler Merkmalssatz, welcher den zumindest einen Ladungsträger und/oder eine Position des zumindest einen Ladungsträgers und/oder einen Ladungszustand des zumindest einen Ladungsträgers repräsentiert.

Dadurch können der zumindest eine Ladungsträger und/oder die Position des zumindest einen Ladungsträgers und/oder der Ladungszustand des zumindest einen Ladungsträgers aus dem digitalen Merkmalssatz ermittelt werden.

In einer Ausführungsform sendet der zumindest eine Sensor oder das Sensornetzwerk die erfassten Umfelddaten über ein Kommunikationsnetzwerk an die Steuerungseinrichtung aus.

Dadurch können die erfassten Umfelddaten über das Kommunikationsnetzwerk an die Steuerungseinrichtung übertragen werden.

In einer Ausführungsform wird die Position des zumindest einen Ladungsträgers aus den Umfelddaten durch die Steuerungseinrichtung, insbesondere mittels des neuronalen Netzes oder durch Mustererkennung, bestimmt, oder erfasst der zumindest eine Sensor oder das Sensornetzwerk die Position des Ladungsträgers, oder wird eine von dem Ladungsträger ausgesendete Positionsinformation erfasst.

Wenn die Position des Ladungsträgers aus den Umfelddaten durch die Steuerungseinrichtung bestimmt wird, dann kann die Position indirekt aus den Umfelddaten, beispielsweise basierend auf einem Kamerabild, durch die Steuerungseinrichtung ermittelt werden. Wenn der zumindest eine Sensor oder das Sensornetzwerk die Position des Ladungsträgers erfasst, dann kann die Position direkt, beispielsweise basierend auf LIDAR-Daten, durch den Sensor ermittelt werden. Wenn eine von dem Ladungsträger ausgesendete Positionsinformation erfasst wird, dann kann die Position basierend auf der Positionsinformation durch die Steuerungseinrichtung ermittelt werden.

In einer Ausführungsform wird das Erfassen von Ladungsträgern ansprechend auf einen Empfang des Befehls und/oder wird ein Erfassen des Ladungszustands ansprechend auf einen Empfang des weiteren Befehls durch die Steuerungseinrichtung ausgeführt.

Dadurch wird eine zeitnahe Erfassung von aktuellen Informationen über den Ladungsträger bewirkt.

In einer Ausführungsform implementiert der zumindest eine Sensor oder das Sensornetzwerk eine Bildkamera, einen Laser-Scanner oder einen Ultraschallsensor oder eine Kombination hiervon.

Ist der Sensor oder das Sensornetzwerk eine Bildkamera, dann kann der Ladungsträger visuell erfasst werden. Ist der Sensor oder das Sensornetzwerk ein Laser-Scanner oder ein Ultraschallsensor, dann kann der Ladungsträger beispielsweise über Distanzmessung erfasst werden.

In einer Ausführungsform ist der Ladungsträger eine Palette und wobei eine Gruppe ausschließlich Paletten umfasst, oder ist der Ladungsträger ein industrieller Roboter und wobei eine weitere Gruppe ausschließlich industrielle Roboter umfasst.

Der industrielle Roboter kann ein Industrieroboter sein, welcher ausgebildet ist, zusätzlich Aufgaben eines Industrieroboters zu übernehmen, wie beispielsweise autonomer Waren- oder Teiletransport, Gabelstaplerfunktionen. In einer Ausführungsform ist der industrielle Roboter translatorisch beweglich. In einer Ausführungsform ist der industrielle Roboter eine Vorrichtung zur Beförderung von Waren, beispielsweise ein autonomes oder teilautonomes Fahrzeug, insbesondere Flurförderzeug.

In einer Ausführungsform wird die elektronische Darstellung des industriellen Umfelds zusammen mit der Position des Ladungsträgers auf der elektronischen Anzeige angezeigt.

Dadurch kann dem Benutzer das industrielle Umfeld auf der elektronischen Anzeige gemäß dem Befehl informationsgefiltert angezeigt werden, beispielsweise als Karte.

In einer Ausführungsform ist die Anzeige in einem mobilen Kommunikationsgerät implementiert und sendet die Steuerungseinrichtung Anzeigedaten, insbesondere umfassend die elektronische Darstellung des industriellen Umfelds und die Position des Ladungsträgers, an das mobile Kommunikationsgerät über ein Kommunikationsnetzwerk aus.

Dadurch können die Anzeigedaten durch das mobile Kommunikationsgerät in dem industriellen Umfeld angezeigt werden.

Gemäß einem zweiten Aspekt wird die erfindungsgemäße Aufgabe durch eine Systemanordnung zum automatischen Lokalisieren zumindest eines Ladungsträgers einer Mehrzahl von Ladungsträgern in einer elektronischen Darstellung eines industriellen Umfelds gelöst, wobei in dem industriellen Umfeld die Mehrzahl der Ladungsträger angeordnet ist, wobei den Ladungsträgern Gruppen von Ladungsträgern zugeordnet sind, wobei jede Gruppe von Ladungsträgern durch eine Gruppenidentifikation identifizierbar ist, mit den folgenden Merkmalen: einer elektronischen Benutzerschnittstelle zum Erfassen einer Benutzereingabe; einer Steuerungseinrichtung zum Detektieren eines Befehls zum Anzeigen von Ladungsträgern gemäß einer bestimmten Gruppenidentifikation in der erfassten Benutzereingabe; wobei die Steuerungseinrichtung zum Erfassen der Position von zumindest einem Ladungsträger der Mehrzahl von Ladungsträgern, welcher der durch die detektierte Gruppenidentifikation identifizierten Gruppe von Ladungsträgern zugeordnet ist, ausgebildet ist; und einer elektronischen Anzeige zum Anzeigen der Position des zumindest einen Ladungsträgers in der elektronischen Darstellung des industriellen Umfelds mittels der Steuerungseinrichtung.

Dadurch wird die Position, beispielsweise nur die Position, des Ladungsträgers auf der elektronischen Anzeige angezeigt, dessen Gruppenidentifkation in der Benutzereingabe detektiert wurde. Somit können je nach bestimmter Gruppenidentifikation nur die Ladungsträger identifiziert und angezeigt werden, über die weitere Informationen erstellt werden sollen.

In einer Ausführungsform ist die Systemanordnung ausgebildet, das Verfahren gemäß dem ersten Aspekt auszuführen.

Mit der Erfindung gemäß dem ersten und zweiten Aspekt sind wesentliche Vorteile verbunden:
Die Ladungsträger und auf den Ladungsträgern aufgeladene Waren müssen zur Positionsbestimmung nicht mit eigenen Sensoren oder Trackern ausgestattet werden. Somit lassen sich Objekte, wie die Ladungsträger und auf den Ladungsträgern aufgeladene Waren, auf- und wiederfinden, insbesondere in einem Warenlager, ohne dass eine aufwändige Umrüstung der Objekte notwendig ist. Ferner können beispielsweise Sensoren an Positionen angebracht werden, beispielsweise an Decken oder Wänden eines Warenlagers, welche die Wahrscheinlichkeit einer Beschädigung oder Entwendung der zur Positionsbestimmung notwendigen Sensoren während eines üblichen Betriebs in dem industriellen Umfeld minimiert. Beispielsweise kann auf bereits vorhandene Sensoren zurückgegriffen werden. Durch die Zuordnung der Gruppenidentifikation können für den Befehl überflüssige Informationen herausgefiltert werden, und somit einem Benutzer der elektronischen Anzeige nur die relevanten Informationen visuell bereitgestellt werden.

Die für den Gegenstand des ersten Aspekts genannten Ausführungsformen sind ebenfalls Ausführungsformen für den Gegenstand des zweiten Aspekts.

Weitere Vorteile und Einzelheiten der Erfindung werden beispielhaft anhand der in den schematischen Figuren dargestellten Ausführungsbeispielen näher erläutert. Hierbei zeigt:
Figur 1 eine schematische Aufsicht einer Systemanordnung gemäß einer Ausführungsform zum automatischen Lokalisieren zumindest eines Ladungsträgers einer Mehrzahl von Ladungsträgern in einer elektronischen Darstellung eines industriellen Umfelds;
Figur 2 eine elektronische Anzeige der Systemanordnung gemäß einer Ausführungsform; und
Figur 3a ein Flussdiagramm, welches Schritte eines Verfahrens gemäß einer Ausführungsform zum automatischen Lokalisieren zumindest eines Ladungsträgers einer Mehrzahl von Ladungsträgern in einer elektronischen Darstellung eines industriellen Umfelds illustriert;
Figur 3b ein Flussdiagramm, welches weitere Schritte des in der Figur 3a dargestellten Verfahrens gemäß einer Ausführungsform illustriert; und
Figur 3c ein Flussdiagramm, welches weitere Schritte des in der Figur 3a dargestellten Verfahrens gemäß einer Ausführungsform illustriert.

In der folgenden Beschreibung wird auf die beiliegenden Figuren Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen der vorliegenden Erfindung werden unter Bezugnahme auf die Figuren beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der vorliegenden Erfindung zu vermitteln.

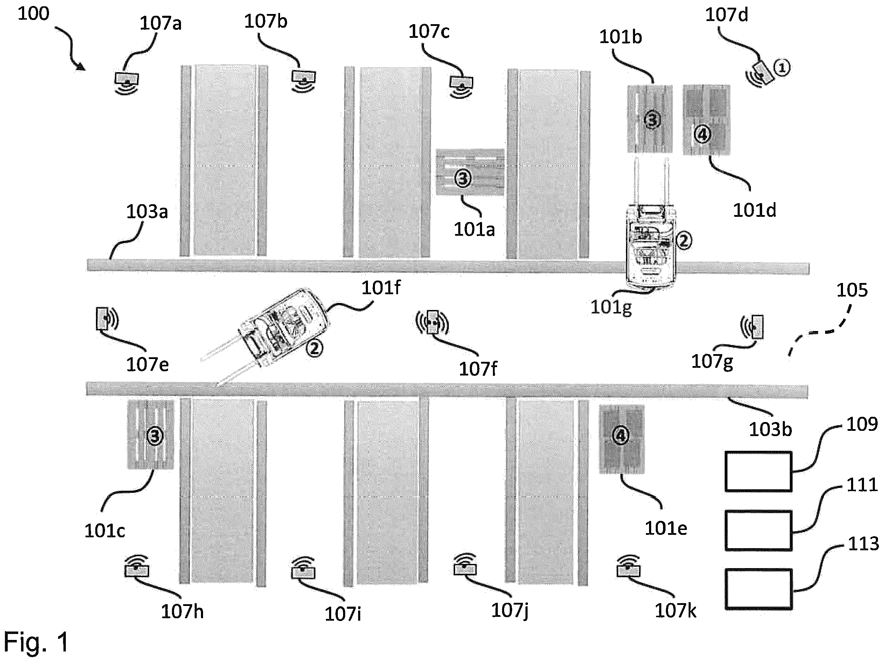

Figur 1 zeigt eine schematische Aufsicht einer Systemanordnung 100 gemäß einer Ausführungsform zum automatischen Lokalisieren zumindest eines Ladungsträgers 101a-g einer Mehrzahl von Ladungsträgern 101a-g in einer elektronischen Darstellung eines industriellen Umfelds. Wie in der Figur 1 dargestellt, sind die Mehrzahl der Ladungsträger 101a-g in dem industriellen Umfeld angeordnet ist.

In der Figur 1 ist das industrielle Umfeld beispielhaft durch zwei Regalanordnungen 103a-b dargestellt, welche beispielsweise zur Lagerung von Waren und/oder als Paletten ausgebildeten Ladungsträger 101a-g ausgebildet sein können. Wie in der Figur 1 ferner dargestellt, können die zwei Regalanordnungen durch beabstandete Gänge 105 gekennzeichnet sein, in welche die Ladungsträger 101a-g temporär angeordnet seien können, beispielsweise zur Bewegung oder zur temporären Zwischenlagerung.

Den Ladungsträgern 101a-g sind Gruppen von Ladungsträgern zugeordnet. Wie in der Figur 1 durch die Ladungsträger 101a-e schematisch dargestellt, kann eine erste Gruppe der Ladungsträger 101a-g ausschließlich Paletten sein, auf welcher beispielsweise Waren angeordnet werden können. Ferner kann, wie in der Figur 1 durch die Ladungsträger 101f-g schematisch dargestellt, eine zweite Gruppe der Ladungsträger 101a-g ausschließlich industrielle Roboter sein, welche autonom oder teilautonom, beispielsweise ferngesteuert, Waren oder insbesondere als Paletten ausgebildete Ladungsträger 101a-g aufnehmen und/oder befördern können. Wie in der Figur 1 für die erste Gruppe schematisch dargestellt, können die Gruppen beispielsweise Untergruppen umfassen, welche beispielsweise einem Ladungszustand der Ladungsträger 101a-g zugeordnet sind. Beispielsweise kann zwischen Paletten ohne Beladung, Paletten mit teilweiser Beladung, und Paletten mit vollständiger Beladung differenziert werden. Jede Gruppe von Ladungsträgern 101a-g ist durch eine Gruppenidentifikation identifizierbar. Ferner kann beispielsweise jede Untergruppe durch die Gruppenidentifikation der entsprechenden übergeordneten Gruppe identifizierbar sein.

Wie in der Figur 1 dargestellt, kann die Systemanordnung 100 zumindest einen Sensor 107a-k umfassen. Mehrere der Sensoren 107a-k können ein Sensornetzwerk bilden, welches das industrielle Umfeld zumindest teilweise oder insbesondere vollständig abdeckt. Der zumindest eine Sensor 107a-k oder das Sensornetzwerk kann eine Bildkamera, einen Laser-Scanner oder einen Ultraschallsensor oder eine Kombination hiervon implementieren.

Wie in der Figur 1 lediglich schematisch dargestellt, umfasst die Systemanordnung 100 eine elektronische Benutzerschnittstelle 109 zum Erfassen einer Benutzereingabe und eine Steuerungseinrichtung 111 zum Detektieren eines Befehls zum Anzeigen von Ladungsträgern 101a-g gemäß einer bestimmten Gruppenidentifikation in der erfassten Benutzereingabe. Die Steuerungseinrichtung 111 ist zum Erfassen der Position von zumindest einem Ladungsträger 101a-g der Mehrzahl von Ladungsträgern 101a-g, welcher der durch die detektierte Gruppenidentifikation identifizierten Gruppe von Ladungsträgern 101a-g zugeordnet ist, ausgebildet.

Die Systemanordnung 100 umfasst ferner eine in der Figur 1 lediglich schematisch dargestellte elektronische Anzeige 113 zum Anzeigen der Position des zumindest einen Ladungsträgers 101a-g in der elektronischen Darstellung des industriellen Umfelds mittels der Steuerungseinrichtung 111.

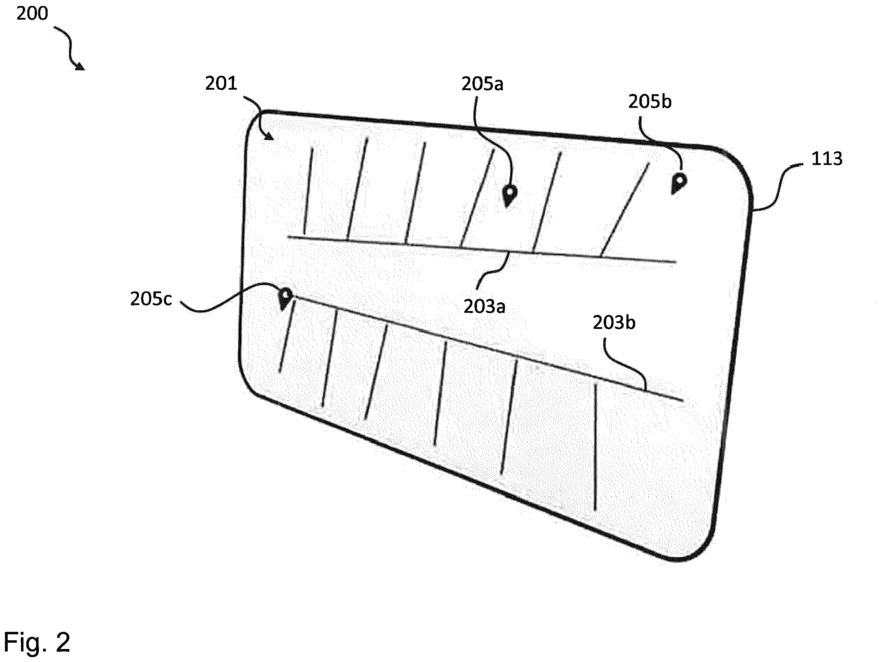

Figur 2 zeigt die elektronische Anzeige 113 der Systemanordnung 100 gemäß einer Ausführungsform. Es wird auf die zur Figur 1 beschriebene Ausführungsform verwiesen, wonach die Systemanordnung eine elektronische Benutzerschnittstelle 109, eine Steuerungseinrichtung 111 und eine elektronische Anzeige 113 umfasst. Wie in der Figur 2 dargestellt, kann die elektronische Anzeige 113 in einem mobilen Kommunikationsgerät 200 implementiert ist, insbesondere in einem Smartphone.

Die Steuerungseinrichtung 111 kann Anzeigedaten, insbesondere umfassend die elektronische Darstellung des industriellen Umfelds und die Position des Ladungsträgers 101a-g, an das mobile Kommunikationsgerät 200 über ein Kommunikationsnetzwerk aussenden. Die elektronische Darstellung des industriellen Umfelds kann zusammen mit der Position des Ladungsträgers 101a-g auf der elektronischen Anzeige 113 angezeigt werden.

Wie in der Figur 2 dargestellt, kann die durch Symbole 205a-c repräsentierte Position in einer digitalen Karte 201 des industriellen Umfelds, insbesondere in einem digitalen Zwilling des industriellen Umfelds, angezeigt werden. Das industrielle Umfeld kann durch die digitale Karte 201, insbesondere durch den digitalen Zwilling, repräsentiert sein. Wie in der Figur 2 dargestellt, kann die digitale Karte 201 ein, insbesondere vereinfachtes, Abbild 203a-b des industriellen Umfelds umfassen. Das Abbild 203a-b des industriellen Umfeldes repräsentiert beispielhaft die in der Figur 1 dargestellten Regalanordnungen 103a-b.

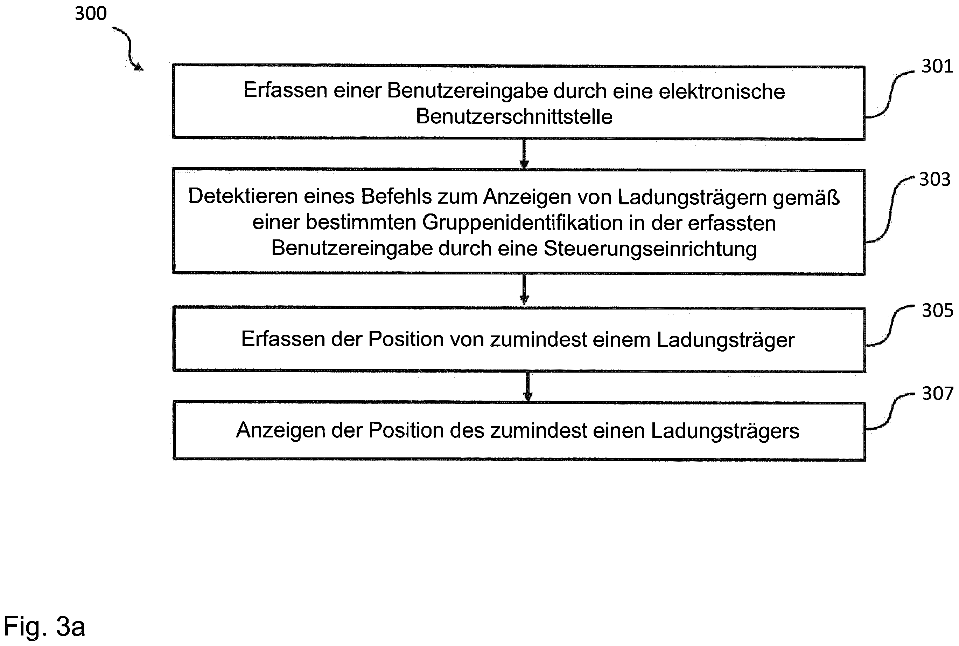

Figur 3a zeigt ein Verfahren 300 gemäß einer Ausführungsform zum automatischen Lokalisieren zumindest eines Ladungsträgers 101a-g der Mehrzahl von Ladungsträgern 101a-g in einer elektronischen Darstellung des industriellen Umfelds. Wie zu den Figuren 1 und 2 bereits beschrieben, ist in dem industriellen Umfeld die Mehrzahl der Ladungsträger 101a-g angeordnet, wobei den Ladungsträgern 101a-g Gruppen von Ladungsträgern 101a-g zugeordnet sind, wobei jede Gruppe von Ladungsträgern 101a-g durch eine Gruppenidentifikation identifizierbar ist.

Das Verfahren umfasst einen ersten Schritt 301 eines Erfassens einer Benutzereingabe durch die elektronische Benutzerschnittstelle 109. Die elektronische Benutzerschnittstelle kann beispielsweise eine graphische Benutzerschnittstelle, eine Tastatur und/oder eine Audioschnittstelle umfassen. Die Audioschnittstelle kann beispielsweise einen Sprachbefehl eines Benutzers aufnehmen.

Das Verfahren umfasst ferner einen zweiten Schritt 303 eines Detektierens eines Befehls zum Anzeigen von Ladungsträgern 101a-g gemäß einer bestimmten Gruppenidentifikation in der erfassten Benutzereingabe durch die Steuerungseinrichtung 111. Beispielsweise kann ein insbesondere als Sprachbefehl ausgebildeter Befehl durch eine Spracherkennung, insbesondere mittels domainspezifischer Spracherkennung (im Englischen auch als Domain Specific Language bezeichnet) durch die Steuerungseinrichtung 111 detektiert werden.

Das Detektieren kann beispielsweise eine Extraktion der wichtigsten Merkmale, wie charakteristische Satzbausteine, und eine Zuordnung zu einer maschinenlesbaren Textform umfassen. Die maschinenlesbare Textform kann beispielsweise kontextbasiert durch die Steuerungseinrichtung 111 interpretiert werden, insbesondere durch Implementierung eines weiteren neuronalen Netzes. Beispielweise kann ein Sprachbefehl "Lokalisiere alle Paletten" lauten und eine zugeordnete maschinenlesbare Textform "LOKALISIERE - PALETTE" lauten. Der Befehl kann beispielsweise weitere charakteristische Satzbausteine umfassen, wie durch den beispielhaften Befehl "Lokalisiere alle Paletten ohne Beladung" veranschaulicht, welche die Gruppenidentifikation der anzuzeigenden Ladungsträger 101a-g weiter spezifizieren.

Das Verfahren umfasst ferner einen dritten Schritt 305 eines Erfassens der Position von zumindest einem Ladungsträger 101a-g der Mehrzahl von Ladungsträgern 101a-g, welcher der durch die detektierte Gruppenidentifikation identifizierten Gruppe von Ladungsträgern 101a-g zugeordnet ist, durch die Steuerungseinrichtung 111.

Das Verfahren umfasst ferner einen vierten Schritt 307 eines Anzeigens der Position des zumindest einen Ladungsträgers 101a-g in der elektronischen Darstellung des industriellen Umfelds mittels der durch die Steuerungseinrichtung 111 gesteuerten elektronischen Anzeige 113.

Ansprechend auf die Detektion der Gruppenidentifikation können die Positionen sämtlicher Ladungsträger 101a-g in der elektronischen Darstellung angezeigt werden, welche der durch die Gruppenidentifikation identifizierten Gruppe zugeordnet sind.

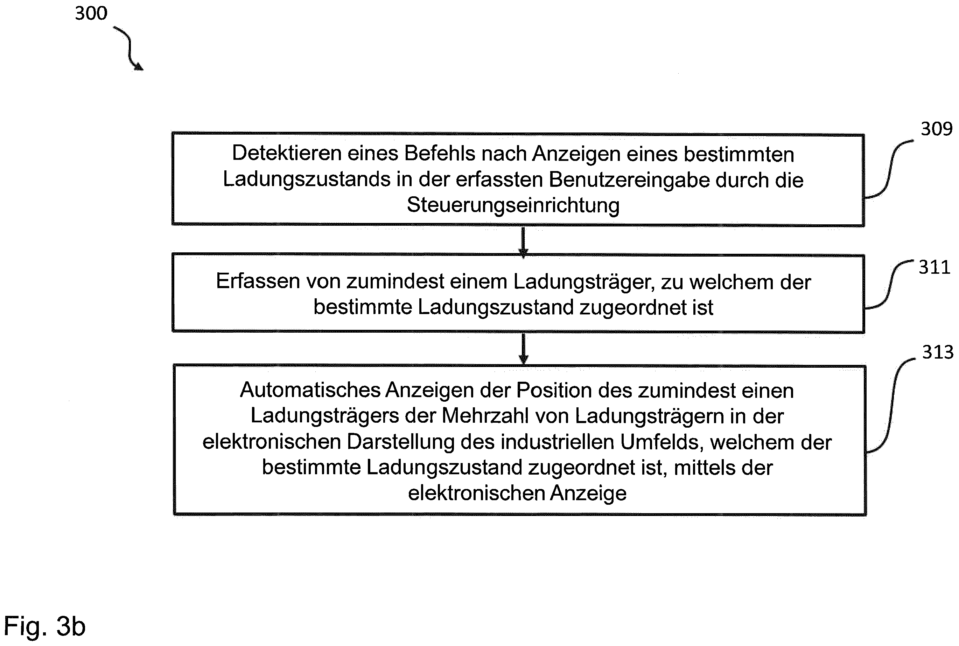

Figur 3b zeigt ein Flussdiagramm, welches weitere Schritte des in der Figur 3a dargestellten Verfahrens 300 gemäß einer Ausführungsform illustriert. Es wird auf die Figur 3a verwiesen, wobei das Verfahren einen ersten Schritt 301, einen zweiten Schritt 303, einen dritten Schritt 305 und einen vierten Schritt 307 umfasst. Gemäß der in Figur 3b dargestellten Ausführungsform des Verfahrens 300 kann jedem in dem industriellen Umfeld angeordneten Ladungsträger 101a-g ein Ladungszustand aus einer Mehrzahl von vorbestimmten Ladungszuständen zugeordnet werden.

Das Verfahren 300 kann einen fünften Schritt 309 eines Detektierens eines Befehls nach einem Anzeigen eines bestimmten Ladungszustands in der erfassten Benutzereingabe durch die Steuerungseinrichtung 111 umfassen.

Das Verfahren 300 kann einen sechsten Schritt 311 eines Erfassens von zumindest einem Ladungsträger 101a-g, zu welchem der bestimmte Ladungszustand zugeordnet ist, umfassen.

Das Verfahren 300 kann einen siebten Schritt 313 eines automatischen Anzeigens der Position des zumindest einen Ladungsträgers 101a-g der Mehrzahl von Ladungsträgern 101a-g in der elektronischen Darstellung des industriellen Umfelds, welchem der bestimmte Ladungszustand zugeordnet ist, mittels der elektronischen Anzeige 113 umfassen.

Ferner können in dem siebten Schritt 313 nur diejenigen Ladungsträger 101a-g angezeigt werden, welche der durch die Gruppenidentifikation identifizierten Gruppe zugeordnet sind und welchen der bestimmte Ladungszustand zugeordnet ist. Ferner können unterschiedliche Ladungszustände durch unterschiedliche Zusammensetzung der Beladung des Ladungsträgers 101a-g, oder durch unterschiedliche Beladungsmengen der Beladung des Ladungsträgers 101a-g bestimmt sein.

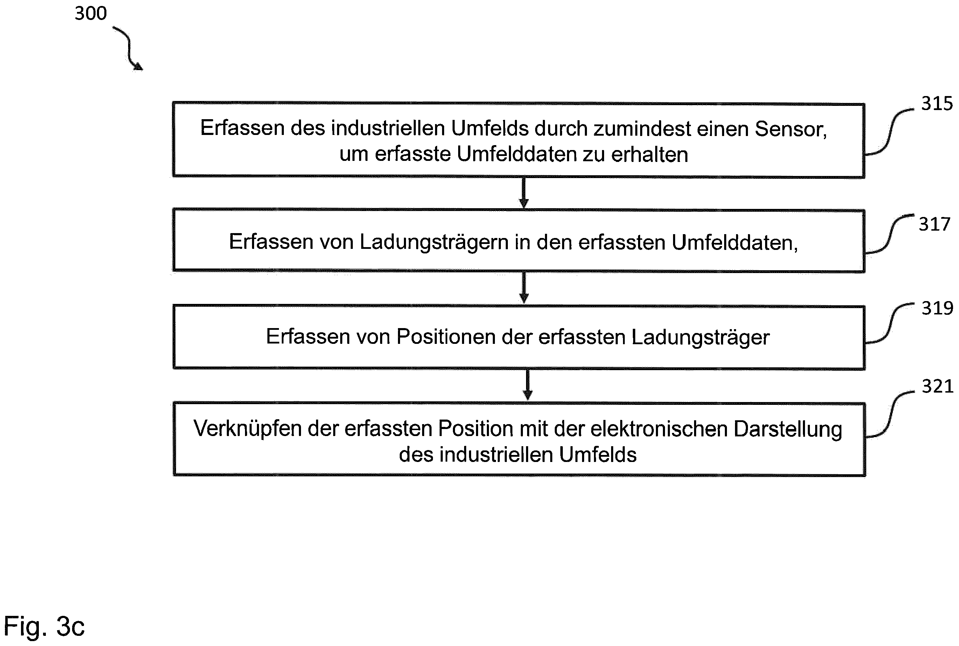

Figur 3c zeigt ein Flussdiagramm, welches weitere Schritte des in der Figur 3a dargestellten Verfahrens 300 gemäß einer Ausführungsform illustriert. Es wird auf die Figur 3a verwiesen, wobei das Verfahren einen ersten Schritt 301, einen zweiten Schritt 303, einen dritten Schritt 305 und einen vierten Schritt 307 umfasst.

Das Verfahren 300 kann einen achten Schritt 315 eines Erfassens des industriellen Umfelds durch den zumindest einen Sensor 107a-k, insbesondere durch das Sensornetzwerk umfassen, um erfasste Umfelddaten zu erhalten.

Das Verfahren 300 kann einen neunten Schritt 317 eines Erfassens von Ladungsträgern 101a-g in den erfassten Umfelddaten, welche einer Gruppe von Ladungsträgern 101a-g gemäß einer Gruppenidentifikation aus der Mehrzahl der Gruppenidentifikationen zugeordnet sind, und/oder welchen ein Ladungszustand aus einer Mehrzahl von Ladungszuständen zugeordnet ist, umfassen, wobei der neunte Schritt 317 des Erfassens durch die Steuerungseinrichtung 111 durchgeführt wird.

Das Verfahren 300 kann einen zehnten Schritt 319 eines Erfassens von Positionen der erfassten Ladungsträger 101a-g durch die Steuerungseinrichtung 111 umfassen.

Das Verfahren 300 kann einen elften Schritt 321 eines Verknüpfens der erfassten Positionen mit der elektronischen Darstellung des industriellen Umfelds durch die Steuerungseinrichtung 111 umfassen, um die erfassten Positionen in der elektronischen Darstellung des industriellen Umfelds anzuzeigen.

Die Ladungsträger 101a-g der gemäß der Gruppenidentifikation identifizierten Gruppe von Ladungsträgern 101a-g können mittels eines neuronalen Netzes in den erfassten Umfelddaten erfasst werden. Das neuronale Netz kann zur Erfassung von Ladungsträgern 101a-g eingerichtet sein und kann durch die Steuerungseinrichtung 111 ausgeführt werden. Das neuronale Netz kann alternativ oder zusätzlich zur Erkennung von Ladungszuständen eingerichtet sein. Die Ladungszustände der Ladungsträger 101a-g können in den erfassten Umfelddaten mittels des neuronalen Netzes in den erfassten Umfelddaten erfasst werden.

Die Ausgabe des neuronalen Netzes kann ein digitaler Merkmalssatz sein, welcher den zumindest einen Ladungsträger 101a-g und/oder eine Position des zumindest einen Ladungsträgers 101a-g und/oder einen Ladungszustand des zumindest einen Ladungsträgers 101a-g repräsentiert.

Der zumindest eine Sensor 107a-k oder das Sensornetzwerk kann die erfassten Umfelddaten über ein Kommunikationsnetzwerk an die Steuerungseinrichtung 111 aussenden.

Die Position des zumindest einen Ladungsträgers 101a-g kann aus den Umfelddaten durch die Steuerungseinrichtung 111, insbesondere mittels des neuronalen Netzes oder durch Mustererkennung, bestimmt werden. Alternativ kann der zumindest eine Sensor 107a-k oder das Sensornetzwerk die Position des Ladungsträgers erfassen. Ferner kann eine von dem Ladungsträger 101a-g ausgesendete Positionsinformation erfasst werden.

Der neunte Schritt 317 des Erfassens von Ladungsträgern 101a-g kann ansprechend auf einen Empfang des Befehls und/oder ein Erfassen des Ladungszustands kann ansprechend einen Empfang des weiteren Befehls durch die Steuerungseinrichtung 111 ausgeführt werden.

### Bezugszeichenliste

- 100: Systemanordnung
- 101a-g: Ladungsträger
- 103a-b: Regalanordnungen
- 105: Gang
- 107a-k: Sensor
- 109: Elektronische Benutzerschnittstelle
- 111: Steuerungseinrichtung
- 113: Elektronische Anzeige
- 200: Mobiles Kommunikationsgerät
- 201: Digitale Karte
- 203: Abbild des industriellen Umfeldes
- 205: Symbole der Ladungsträger
- 300: Verfahren zum automatischen Lokalisieren zumindest eines Ladungsträgers
- 301: Erster Verfahrensschritt: Erfassen einer Benutzereingabe
- 303: Zweiter Verfahrensschritt: Detektieren eines Befehls zum Anzeigen von Ladungsträgern
- 305: Dritter Verfahrensschritt: Erfassen der Position von zumindest einem Ladungsträger
- 307: Vierter Verfahrensschritt: Anzeigen der Position des zumindest einen Ladungsträgers
- 309: Fünfter Verfahrensschritt: Detektieren eines Befehls nach einem Anzeigen eines bestimmten Ladungszustands
- 311: Sechster Verfahrensschritt: Erfassen von zumindest einem Ladungsträger
- 313: Siebter Verfahrensschritt: Automatisches Anzeigen der Position des zumindest einen Ladungsträgers
- 315: Achter Verfahrensschritt: Erfassen des industriellen Umfelds durch zumindest einen Sensor
- 317: Neunter Verfahrensschritt: Erfassen von Ladungsträgern in den erfassten Umfelddaten
- 319: Zehnter Verfahrensschritt: Erfassen von Positionen der erfassten Ladungsträger
- 321: Elfter Verfahrensschritt: Verknüpfen der erfassten Positionen mit der elektronischen Darstellung des industriellen Umfelds

## Patentansprüche

1. Verfahren (300) zum automatischen Lokalisieren zumindest eines Ladungsträgers (101a-g) einer Mehrzahl von Ladungsträgern (101a-g) in einer elektronischen Darstellung eines industriellen Umfelds, wobei in dem industriellen Umfeld die Mehrzahl der Ladungsträger (101a-g) angeordnet ist, wobei den Ladungsträgern (101a-g) Gruppen von Ladungsträgern (101a-g) zugeordnet sind, wobei jede Gruppe von Ladungsträgern (101a-g) durch eine Gruppenidentifikation identifizierbar ist, mit folgenden Merkmalen:
Erfassen (301) einer Benutzereingabe durch eine elektronische Benutzerschnittstelle (109);
Detektieren (303) eines Befehls zum Anzeigen von Ladungsträgern (101a-g) gemäß einer bestimmten Gruppenidentifikation in der erfassten Benutzereingabe durch eine Steuerungseinrichtung (111);
Erfassen (305) der Position von zumindest einem Ladungsträger (101a-g) der Mehrzahl von Ladungsträgern (101a-g), welcher der durch die detektierte Gruppenidentifikation identifizierten Gruppe von Ladungsträgern (101a-g) zugeordnet ist, durch die Steuerungseinrichtung (111); und
Anzeigen (307) der Position des zumindest einen Ladungsträgers (101a-g) in der elektronischen Darstellung des industriellen Umfelds mittels einer durch die Steuerungseinrichtung (111) gesteuerten elektronischen Anzeige (113).

2. Verfahren (300) nach Anspruch 1, wobei ansprechend auf die Detektion der Gruppenidentifikation die Positionen sämtlicher Ladungsträger (101a-g) in der elektronischen Darstellung angezeigt werden, welche der durch die Gruppenidentifikation identifizierten Gruppe zugeordnet sind.

3. Verfahren (300) nach einem der vorstehenden Ansprüche, wobei jedem in dem industriellen Umfeld angeordneten Ladungsträger (101a-g) ein Ladungszustand aus einer Mehrzahl von vorbestimmten Ladungszuständen zugeordnet werden kann, mit folgenden Merkmalen:
Detektieren (309) eines weiteren Befehls nach einem Anzeigen eines bestimmten Ladungszustands in der erfassten Benutzereingabe durch die Steuerungseinrichtung (111);
Erfassen (311) von zumindest einem Ladungsträger (101a-g), zu welchem der bestimmte Ladungszustand zugeordnet ist; und
Automatisches Anzeigen (313) der Position des zumindest einen Ladungsträgers (101a-g) der Mehrzahl von Ladungsträgern (101a-g) in der elektronischen Darstellung des industriellen Umfelds, welchem der bestimmte Ladungszustand zugeordnet ist, mittels der elektronischen Anzeige (113).

4. Verfahren nach Anspruch 3, wobei nur diejenigen Ladungsträger (101a-g) angezeigt werden, welche der durch die Gruppenidentifikation identifizierten Gruppe zugeordnet sind und welchen der bestimmte Ladungszustand zugeordnet ist.

5. Verfahren (300) nach Anspruch 3 oder 4, wobei unterschiedliche Ladungszustände durch unterschiedliche Zusammensetzung der Beladung des Ladungsträgers (101a-g), oder durch unterschiedliche Beladungsmengen der Beladung des Ladungsträgers (101a-g) bestimmt sind.

6. Verfahren (300) nach einem der vorstehenden Ansprüche, mit folgenden Merkmalen:
Erfassen (315) des industriellen Umfelds durch zumindest einen Sensor (107a-k), insbesondere durch ein Sensornetzwerk, um erfasste Umfelddaten zu erhalten;
Erfassen (317) von Ladungsträgern (101a-g) in den erfassten Umfelddaten, welche einer Gruppe von Ladungsträgern (101a-g) gemäß einer Gruppenidentifikation aus der Mehrzahl der Gruppenidentifikationen zugeordnet sind, und/oder welchen ein Ladungszustand aus einer Mehrzahl von Ladungszuständen zugeordnet ist, wobei das Erfassen (317) durch die Steuerungseinrichtung (111) durchgeführt wird; und
Erfassen (319) von Positionen der erfassten Ladungsträger (101a-g) durch die Steuerungseinrichtung (111); und
Verknüpfen (321) der erfassten Positionen mit der elektronischen Darstellung des industriellen Umfelds durch die Steuerungseinrichtung (111), um die erfassten Positionen in der elektronischen Darstellung des industriellen Umfelds anzuzeigen.

7. Verfahren (300) nach Anspruch 6, wobei die Ladungsträger (101a-g) der gemäß der Gruppenidentifikation identifizierten Gruppe von Ladungsträgern (101a-g) mittels eines neuronalen Netzes in den erfassten Umfelddaten erfasst werden, wobei das neuronale Netz zur Erfassung von Ladungsträgern (101a-g) eingerichtet ist und durch die Steuerungseinrichtung (111) ausgeführt wird.

8. Verfahren (300) nach Anspruch 6 oder 7, wobei die Ladungszustände der Ladungsträger (101a-g) in den erfassten Umfelddaten mittels eines neuronalen Netzes in den erfassten Umfelddaten erfasst werden, wobei das neuronale Netz zur Erkennung von Ladungszuständen eingerichtet ist und durch die Steuerungseinrichtung (111) ausgeführt wird.

9. Verfahren (300) nach einem der vorstehenden Ansprüche 7 oder 8, wobei die Ausgabe des neuronalen Netzes ein digitaler Merkmalssatz ist, welcher den zumindest einen Ladungsträger (101a-g) und/oder eine Position des zumindest einen Ladungsträgers (101a-g) und/oder einen Ladungszustand des zumindest einen Ladungsträgers (101a-g) repräsentiert.

10. Verfahren (300) nach einem der vorstehenden Ansprüche 6 bis 9, wobei der zumindest eine Sensor (107a-k) oder das Sensornetzwerk die erfassten Umfelddaten über ein Kommunikationsnetzwerk an die Steuerungseinrichtung (111) aussendet.

11. Verfahren (300) nach einem der vorstehenden Ansprüche 6 bis 10, wobei die Position des zumindest einen Ladungsträgers (101a-g) aus den Umfelddaten durch die Steuerungseinrichtung (111), insbesondere mittels des neuronalen Netzes oder durch Mustererkennung, bestimmt wird, oder wobei der zumindest eine Sensor (107a-k) oder das Sensornetzwerk die Position des Ladungsträgers erfasst, oder wobei eine von dem Ladungsträger (101a-g) ausgesendete Positionsinformation erfasst wird.

12. Verfahren (300) nach einem der vorstehenden Ansprüche 6 bis 11, wobei das Erfassen (317) von Ladungsträgern (101a-g) ansprechend auf einen Empfang des Befehls und/oder ein Erfassen des Ladungszustands ansprechend auf einen Empfang des weiteren Befehls durch die Steuerungseinrichtung (111) ausgeführt wird.

13. Verfahren (300) nach einem der vorstehenden Ansprüche 6 bis 12, wobei der zumindest eine Sensor (107a-k) oder das Sensornetzwerk eine Bildkamera, einen Laser-Scanner oder einen Ultraschallsensor oder eine Kombination hiervon implementiert.

14. Verfahren (300) nach einem der vorstehenden Ansprüche, wobei der Ladungsträger (101a-g) eine Palette ist und wobei eine Gruppe ausschließlich Paletten umfasst, oder wobei der Ladungsträger (101a-g) ein industrieller Roboter ist und wobei eine weitere Gruppe ausschließlich industrielle Roboter umfasst.

15. Verfahren (300) nach einem der vorstehenden Ansprüche, wobei die elektronische Darstellung des industriellen Umfelds zusammen mit der Position des Ladungsträgers (101a-g) auf der elektronischen Anzeige (113) angezeigt wird.

16. Verfahren (300) nach einem der vorstehenden Ansprüche, wobei die elektronische Anzeige (113) in einem mobilen Kommunikationsgerät (200) implementiert ist und wobei die Steuerungseinrichtung (111) Anzeigedaten, insbesondere umfassend die elektronische Darstellung des industriellen Umfelds und die Position des Ladungsträgers (101a-g), an das mobile Kommunikationsgerät (200) über ein Kommunikationsnetzwerk aussendet.

17. Systemanordnung (100) zum automatischen Lokalisieren zumindest eines Ladungsträgers (101a-g) einer Mehrzahl von Ladungsträgern (101a-g) in einer elektronischen Darstellung eines industriellen Umfelds, wobei in dem industriellen Umfeld die Mehrzahl der Ladungsträger (101a-g) angeordnet ist, wobei den Ladungsträgern (101a-g) Gruppen von Ladungsträgern zugeordnet sind, wobei jede Gruppe von Ladungsträgern (101a-g) durch eine Gruppenidentifikation identifizierbar ist, mit den folgenden Merkmalen:
einer elektronischen Benutzerschnittstelle (109) zum Erfassen einer Benutzereingabe;
einer Steuerungseinrichtung (111) zum Detektieren eines Befehls zum Anzeigen von Ladungsträgern (101a-g) gemäß einer bestimmten Gruppenidentifikation in der erfassten Benutzereingabe;
wobei die Steuerungseinrichtung (111) zum Erfassen der Position von zumindest einem Ladungsträger (101a-g) der Mehrzahl von Ladungsträgern (101a-g), welcher der durch die detektierte Gruppenidentifikation identifizierten Gruppe von Ladungsträgern (101a-g) zugeordnet ist, ausgebildet ist; und
einer elektronischen Anzeige (113) zum Anzeigen der Position des zumindest einen Ladungsträgers (101a-g) in der elektronischen Darstellung des industriellen Umfelds mittels der Steuerungseinrichtung (111).

18. Systemanordnung (100) nach Anspruch 17, welche ausgebildet ist, das Verfahren (300) nach einem der Ansprüche 1 bis 16 auszuführen.
